# EUROPÄISCHE PATENTSCHRIFT

(11) **EP 2 885 336 B1**
(45) Veröffentlichungstag und Bekanntmachung des Hinweises auf die Patenterteilung: **07.08.2019**
(21) Anmeldenummer: 13750267.0
(22) Anmeldetag: 14.08.2013
(51) Int. Cl.: C08G 63/672, D21C 9/08, D21H 17/53

(54) **POLYESTER**
POLYESTER
POLYESTERS

(30) Priorität: 18.08.2012 DE 102012016444
(43) Veröffentlichungstag der Anmeldung: 24.06.2015
(73) Patentinhaber: Clariant International Ltd, 4132 Muttenz (CH)
(72) Erfinder: FISCHER, Dirk, 55270 Klein-Winternheim (DE); MORSCHHAEUSER, Roman, 55122 Mainz (DE); NAUMANN, Peter, 65232 Taunusstein (DE); LEONE-KAMMLER, Antonella, CH-4142 Münchenstein (CH); COWMAN, John, Stuart, Bradford BD9 5PW (GB); KOHLER, Achim, 75081 Heilbronn (DE)
(74) Vertreter: Clariant Produkte (Deutschland) GmbH
(86) Internationale Anmeldenummer: PCT/EP2013/002452
(87) Internationale Veröffentlichungsnummer: WO 2014/029478

(56) Entgegenhaltungen:
- DE-A1- 19 826 356
- US-A1- 2011 180 226

## Beschreibung

Die Erfindung betrifft Polyester, enthaltend Einheiten hervorgegangen aus Terephthalsäuredimethylester, Ethylenglykol, Propylenglykol, Polyethylenglykol, Polyethylenglykolmonomethylether (bzw. Methylpolyethylenglykol) und gegebenenfalls vernetzenden Struktureinheiten.

Die erfindungsgemäßen Polyester sind vorteilhaft geeignet, um hydrophobe Oberflächen zu modifizieren, insbesondere deren Oberflächenspannung zu erhöhen und damit die Affinität der modifizierten Oberflächen zu hydrophoben Stoffen zu verringern, und damit störende Effekte durch Ablagerungen auf den hydrophoben Oberflächen zu reduzieren. Dies kann beispielsweise in Recyclingverfahren von Papier und Karton ausgenutzt werden. Die erfindungsgemäßen Polyester haben eine hohe Affinität zu hydrophoben Oberflächen und bewirken, dass hydrophobe Oberflächen hydrophiler werden und damit deren Benetzbarkeit verbessert wird.

Die erfindungsgemäßen Polyester sind zudem in toxikologischer und ökotoxikologischer Hinsicht gut verträglich.

Polyester aus aromatischen Dicarbonsäuren, wie z.B. Terephthalsäure, und Diolen wie Alkylenglykol sind seit langem bekannt, z.B. im Zusammenhang mit der Reduzierung der Klebrigkeit von mit Klebstoffen kontaminierten Papiermassen.

In US 5,415,739 wird ein Verfahren zur Reduzierung der Klebrigkeit von mit Klebstoffen kontaminierten Papiermassen beschrieben, wobei der Papiermasse ein wasserlösliches Terpolymer, gebildet aus dem Destillationsprodukt verschiedener Monomere zugesetzt wird. Die Monomere können ausgewählt sein aus der Gruppe bestehend aus Polyethylenglykol, einem Phthalsäureester-Rest abgeleitet von entweder einem Phthalsäureester oder einer Phthalsäure und einem einfachen Glykol. Der Phthalsäureester-Rest kann z. B. von Terephthalsäure oder Dimethylterephthalat abgeleitet sein. Als Katalysator zur Herstellung der Terpolymere wird insbesondere Antimontrioxid genannt.

Derartige Polyester wurden aber auch als Bestandteile von Wasch- und Reinigungsmitteln beschrieben, insbesondere zur Verwendung als "Soil Release Polymere (SRP).

DE 10 2008 023 803 offenbart Additive für Wasch- und Reinigungsmittel erhalten durch Polykondensation einer aromatischen Dicarbonsäure und/oder deren C₁-C₄-Alkylestern, Ethylenglykol, gegebenenfalls 1,2-Propylenglykol, gegebenenfalls Polyethylenglykol mit einer mittleren Molmasse von 200 bis 8000 g/mol, gegebenenfalls C₁- bis C₄-Alkylpolyalkylenglykolether mit einer mittleren Molmasse des Polyalkylenglykolethers von 200 bis 5000 und gegebenenfalls einer polyfunktionellen Verbindung und lobt beispielsweise deren feste Konsistenz und Hydrolysestabilität aus. Explizit offenbarte Polyester werden z.B. unter Verwendung von Polyethylenglykol 6000 und einer Mischung aus Methylpolyethylenglykol 750 und Methylpolyethylenglykol 2000 hergestellt.

DE 198 26 356 beschreibt Oligoester, die erhalten werden durch Polykondensation von Dicarbonsäuren oder deren Estern, Ethylenglykol und/oder Propylenglykol, Polyethylenglykol, einem wasserlöslichen Anlagerungsprodukt von einem Alkylenoxid an C₁-C₂₄-Alkohole und einem oder mehrerer Polyole mit 3 bis 6 Hydroxylgruppen, die z. B. als schmutzablösende Polymere in Waschmitteln dienen. Explizit werden z. B. Polyester offenbart, hergestellt aus Dimethyltherephthalat, Ethylenglykol, 1,2-Propylenglykol, Polyethylenglykol 1500, einer Mischung aus Methylpolyethylenglykol 750 und Methylpolyethylenglykol 1820 und Pentaerythritol.

Die US 2011/180226 A1 offenbart Polyester erhältlich durch Polymerisation von Dicarbonsäuren, Ethylenglykol, Propylenglykol, Polyethylenglykol und einem einseitig mit einer Alkylgruppe terminierten Polyalkylenglykol.

Die für die Verwendung in Papierrecyclingprozessen beschriebenen Polyester sind jedoch oftmals im Ergebnis unbefriedigend.

Aufgabe war es daher, ein neues Produkt zur Verfügung zu stellen, das es erlaubt, hydrophobe Oberflächen zu modifizieren, insbesondere deren Oberflächenspannung zu erhöhen, und Ablagerungen von unerwünschten Verklebungsresten im Papierrecyclingprozess effizient zu eliminieren oder signifikant zu reduzieren.

Es wurde nun überraschend gefunden, dass diese Aufgabe durch Polyester, die erhältlich sind durch Polymerisation von
a) Terephthalsäuredimethylester, und
b) Ethylenglykol, und
c) 1,2-Propylenglykol, und
d) einem oder mehreren Polyethylenglykolen, vorzugsweise einem Polyethylenglykol, mit gewichtsmittleren Molekulargewichten im Bereich von 1000 bis 2000 g/mol, und
e) einem einzigen Methylpolyethylenglykol mit einem gewichtsmittleren Molekulargewicht im Bereich von 1050 bis 1350 g/mol,
f) entweder in Gegenwart oder in Abwesenheit von einer oder mehreren vernetzend wirkenden Verbindungen mit 3 bis 6 zur Polykondensation befähigten Funktionen, insbesondere Säure-, Alkohol- oder Esterfunktionen,
   gelöst wird.

Gegenstand der Erfindung sind daher Polyester, die erhältlich sind durch Polymerisation von
a) Terephthalsäuredimethylester, und
b) Ethylenglykol, und
c) 1,2-Propylenglykol, und
d) einem oder mehreren Polyethylenglykolen, vorzugsweise einem Polyethylenglykol, mit gewichtsmittleren Molekulargewichten im Bereich von 1000 bis 2000 g/mol, und
e) einem einzigen Methylpolyethylenglykol mit einem gewichtsmittleren Molekulargewicht im Bereich von 1050 bis 1350 g/mol,
f) entweder in Gegenwart oder in Abwesenheit von einer oder mehreren vernetzend wirkenden Verbindungen mit 3 bis 6 zur Polykondensation befähigten Funktionen, insbesondere Säure-, Alkohol- oder Esterfunktionen.

Die erfindungsgemäßen Polyester lassen sich durch Umesterung und Kondensation der Komponenten a) bis e) entweder in Gegenwart oder in Abwesenheit der Komponente f) in Gegenwart von Umesterungs- und Kondensationskatalysatoren des Standes der Technik, wie vorzugsweise Titantetraisopropylat/Natriumacetat, Dibutylzinnoxid, Alkali- oder Erdalkalimetallalkoholate herstellen. Vorteilhaft ist, dass die Herstellung der erfindungsgemäßen Polyester ohne Verwendung von Sb₂O₃ als Katalysator, welches als eine möglicherweise krebserzeugende Substanz eingestuft ist, erfolgen kann.

Die erfindungsgemäßen Polyester zeichnen sich dadurch aus, dass sie keine Restmonomere ausgewählt aus Polyethylenglykolen und Methylpolyethylenglykolen mit gewichtsmittleren Molekulargewichten unterhalb von 1000 g/mol enthalten, die aus toxikologischer und ökotoxikologischer Sicht unerwünscht sind.

Erfindungswesentlich ist, dass ein einziges Methylpolyethylenglykol mit einem gewichtsmittleren Molekulargewicht im Bereich von 1050 bis 1350 g/mol als Monomer eingesetzt wird und nicht eine Mischung aus zwei oder mehreren Methylpolyethylenglykolen. Auf diese Weise werden Polyester mit engerer Molekulargewichtsverteilung und verbesserter Qualität erhalten.

Bevorzugt sind als Komponente d) eine oder mehrere Verbindungen, ausgewählt aus Polyethylenglykolen mit gewichtsmittleren Molekulargewichten im Bereich von 1200 bis 1800 g/mol.

Besonders bevorzugt ist als Komponente d) ein Polyethylenglykol mit einem gewichtsmittleren Molekulargewicht von 1500 g/mol.

Bevorzugt als Komponente e) ist ein Methylpolyethylenglykol mit einem gewichtsmittleren Molekulargewicht im Bereich von 1100 bis 1300 g/mol.

Besonders bevorzugt ist als Komponente e) ein Methylpolyethylenglykol mit einem gewichtsmittleren Molekulargewicht von 1250 g/mol.

In einer bevorzugten Ausführungsform der Erfindung sind die erfindungsgemäßen Polyester dadurch gekennzeichnet, dass sie erhältlich sind durch Polymerisation der Komponenten a) bis e) in Gegenwart der Komponente f).

Bevorzugt als Komponente f) sind Verbindungen ausgewählt aus der Gruppe bestehend aus Zitronensäure, Äpfelsäure, Weinsäure, Gallussäure, 2,2-Dihydroxymethylpropionsäure, Pentaerythritol, Glycerol, Sorbitol, Mannitol, 1,2,3-Hexantriol, Benzol-1,2,3-tricarbonsäure (Hemimellithsäure), Benzol-1,2,4-tricarbonsäure (Trimellithsäure) und Benzol-1,3,5-tricarbonsäure (Trimesithsäure).

Besonders bevorzugt als Komponente f) sind Verbindungen ausgewählt aus der Gruppe bestehend aus Pentaerythritol und Glycerol.

Insbesondere bevorzugt als Komponente f) ist Pentaerythritol.

In einer weiteren bevorzugten Ausführungsform der Erfindung sind die erfindungsgemäßen Polyester dadurch gekennzeichnet, dass sie erhältlich sind durch Polymerisation der Komponenten a) bis e) in Abwesenheit der Komponente f).

Bevorzugt sind erfindungsgemäße Polyester, erhältlich durch Polymerisation der Komponenten a) bis e) entweder in Gegenwart oder in Abwesenheit der Komponente f) in folgenden Molverhältnissen, jeweils bezogen auf 1 Mol Komponente a):
0,2 bis 0,8 Mol, vorzugsweise 0,3 bis 0,7 Mol, besonders bevorzugt 0,4 bis 0,6 Mol, insbesondere bevorzugt 0,5 bis 0,6 Mol Komponente b), und 1,0 bis 2,0 Mol, vorzugsweise 1,1 bis 1,6 Mol, besonders bevorzugt 1,2 bis 1,5 Mol, insbesondere bevorzugt 1,3 bis 1,4 Mol der Komponente c), und 0,05 bis 2,0 Mol, vorzugsweise 0,1 bis 1,0 Mol, besonders bevorzugt 0,2 bis 0,8 Mol, insbesondere bevorzugt 0,25 bis 0,5 Mol der Komponente d), und 0,01 bis 1,0 Mol, vorzugsweise 0,05 bis 0,8 Mol, besonders bevorzugt 0,1 bis 0,5 Mol, insbesondere bevorzugt 0,11 bis 0,3 Mol, Komponente e), und entweder in Gegenwart von 0,00001 bis 1,0 Mol, vorzugsweise 0,00001 bis 0,5 Mol, besonders bevorzugt 0,0001 bis 0,01 Mol, insbesondere bevorzugt 0,0002 bis 0,01 Mol, Komponente f) oder in Abwesenheit von Komponente f).

Die Polyester haben vorzugsweise gewichtsmittlere Molekulargewichte im Bereich von 700 bis 50 000 g/mol, besonders bevorzugt von 800 bis 25 000 g/mol, insbesondere bevorzugt von 1 000 bis 15 000 g/mol und außerordentlich bevorzugt von 1 200 bis 12 000 g/mol. Das gewichtsmittlere Molekulargewicht wird bestimmt mittels Größenausschlusschromatographie in wässriger Lösung unter Verwendung einer Kalibrierung mit Hilfe eng verteiltem Polyacrylsäure-Na-Salz Standard.

Vorzugsweise werden die erfindungsgemäßen Polyester hergestellt durch Polymerisation der Komponenten a) bis e) entweder in Gegenwart oder in Abwesenheit der Komponente f).

Bei den erfindungsgemäßen Polyestern handelt es sich vorzugsweise um nichtionische Polyester.

In einer besonders bevorzugten Ausführungsform der Erfindung sind die erfindungsgemäßen Polyester erhältlich durch Polymerisation der Komponenten a) bis e) entweder in Gegenwart oder in Abwesenheit der Komponente f), wobei die zur Polymerisation eingesetzte Menge der Komponente d) < 80,0 Gew.-%, vorzugsweise < 70,0 Gew.-% und besonders bevorzugt < 50,0 Gew.-% ist, jeweils bezogen auf das Gesamtgewicht der zur Polymerisation eingesetzten Komponenten a) bis e) bzw. a) bis f).

In einer weiteren besonders bevorzugten Ausführungsform der Erfindung sind die erfindungsgemäßen Polyester erhältlich durch Polymerisation der Komponenten a) bis e) entweder in Gegenwart oder in Abwesenheit der Komponente f), wobei die Menge der Struktureinheiten hervorgegangen aus Komponente d) in den erfindungsgemäßen Polyestern < 80,0 Gew.-%, vorzugsweise < 70,0 Gew.-% und besonders bevorzugt < 50,0 Gew.-% ist, jeweils bezogen auf das Gesamtgewicht der erfindungsgemäßen Polyester.

In einer weiteren besonders bevorzugten Ausführungsform der Erfindung sind die erfindungsgemäßen Polyester erhältlich durch Polymerisation der Komponenten a) bis e) entweder in Gegenwart oder in Abwesenheit der Komponente f), wobei die zur Polymerisation eingesetzte Menge der Komponenten d) und e) zusammen < 80,0 Gew.-% und vorzugsweise < 70,0 Gew.-% ist, jeweils bezogen auf das Gesamtgewicht der zur Polymerisation eingesetzten Komponenten a) bis e) bzw. a) bis f).

In einer weiteren besonders bevorzugten Ausführungsform der Erfindung sind die erfindungsgemäßen Polyester erhältlich durch Polymerisation der Komponenten a) bis e) entweder in Gegenwart oder in Abwesenheit der Komponente f), wobei die Menge der Struktureinheiten hervorgegangen aus den Komponenten d) und e) zusammen in den erfindungsgemäßen Polyestern < 80,0 Gew.-% und vorzugsweise < 70,0 Gew.-% ist, jeweils bezogen auf das Gesamtgewicht der erfindungsgemäßen Polyester.

Wie bereits erwähnt sind die erfindungsgemäßen Polyester in vorteilhafter Weise geeignet, um hydrophobe Oberflächen zu modifizieren, insbesondere deren Oberflächenspannung zu erhöhen, und damit störende Effekte durch Ablagerungen auf den hydrophoben Oberflächen zu reduzieren, was beispielsweise in vorteilhafter Weise in Recyclingverfahren von Papier und Karton ausgenutzt werden kann.

Weiterer Gegenstand der vorliegenden Erfindung ist daher die Verwendung eines oder mehrerer der erfindungsgemäßen Polyester zur Modifizierung hydrophober Oberflächen, vorzugsweise in Recyclingverfahren von Papier und Karton.

Die erfindungsgemäßen Polyester sind zudem hervorragend dazu geeignet, die Ablagerung von unerwünschten Verklebungsresten, insbesondere im Papierrecyclingprozess, zu verringern.

Weiterer Gegenstand der vorliegenden Erfindung ist daher die Verwendung eines oder mehrerer der erfindungsgemäßen Polyester zur Verringerung der Ablagerung von unerwünschten Verklebungsresten, insbesondere im Papierrecyclingprozess.

Das eine oder die mehreren erfindungsgemäßen Polyester werden vorzugsweise in Form von wässrigen Dispersionen verwendet und z. B. als wässrige Dispersion in Recyclingverfahren von Papier und Karton eingesetzt. Die Verwendung der wässrigen Dispersion hat gegenüber der Verwendung der Polyester in Substanz den Vorteil einer leichteren Dosierbarkeit und einer besseren Handhabbarkeit.

Weiterer Gegenstand der vorliegenden Erfindung sind daher auch wässrige Dispersionen enthaltend ein oder mehrere erfindungsgemäße Polyester.

Die wässrigen Dispersionen enthalten das eine oder die mehreren erfindungsgemäßen Polyester in einer Menge von vorzugsweise 5,0 bis 50,0 Gew.-%, besonders bevorzugt 10,0 bis 30,0 Gew.-% und insbesondere bevorzugt 15,0 bis 25,0 Gew.-%, jeweils bezogen auf das Gesamtgewicht der fertigen wässrigen Dispersion. In einer besonders bevorzugten Ausführungsform der Erfindung bestehen die wässrigen Dispersionen aus dem einen oder den mehreren erfindungsgemäßen Polyestern und Wasser.

Die erfindungsgemäßen Polyester zeichnen sich durch eine vorteilhafte Dispergierbarkeit und Löslichkeit in Wasser aus. Wässrige Dispersionen bestehend aus den erfindungsgemäßen Polyestern und Wasser besitzen eine vorteilhafte Lagerstabilität und zeigen keine oder nur sehr geringe Bodensatzbildung.

Die nachfolgenden Beispiele sollen die Erfindung erläutern ohne sie darauf einzuschränken. Alle Prozentangaben sind, sofern nicht explizit anders angegeben, als Gewichtsprozent (Gew.-%) zu verstehen.

### Beispiele

### Herstellung von Polyester 1

In einem 1-Liter Vierhalskolben mit KPG-Rührer, Innenthermometer, Vigreux-Kolonne, Destillationsbrücke, N₂-Überleitung (5 Liter/Stunde) und Anschütz-Thiele-Vorstoß wurden 164,4 g (0,85 Mol) Terephthalsäuredimethylester, 87,9 g (1,155 Mol) 1,2-Propandiol, 29,5 g (0,475 Mol) Ethylenglykol, 1,14 g (0,008 Mol) Pentaerythrit und 0,75 g (0,0009 Mol) Natriumacetat vorgelegt und das Reaktionsgemisch anschließend unter N₂-Überlagerung (5 Liter/Stunde), auf 60 °C Innentemperatur unter Rühren bei einer Rührgeschwindigkeit von 50-100 Umdrehungen/Minute, hochgeheizt. Nach Schließung der N₂-Überlagerung wurden 0,2 g (0,0007 Mol) Titantetraisopropylat zugegeben. Anschließend wurde die Rührgeschwindigkeit auf 300 Umdrehungen/ Minute erhöht und der Ansatz innerhalb von 2 Stunden auf eine Innentemperatur von 150 °C und in weiteren 2 Stunden auf eine Innentemperatur von 200 °C hochgeheizt. Ab einer Innentemperatur von 170 °C wurde die N₂-Überlagerung wieder geöffnet. Das Reaktionsgemisch wurde 2 Stunden bei 200 °C erhitzt und entstehendes Methanol abdestilliert, das in einer mit Eis gekühlten Vorlage kondensiert wurde. Anschließend wurde die Reaktionsmischung auf Raumtemperatur abgekühlt und 328,7 g (0,219 Mol) Polyethylenglykol 1500 und 137,8 g (0,11 Mol) Polyethylenglykolmonomethylether 1250 zugegeben. Die Mischung wurde unter N₂-Überlagerung (5 Liter/Stunde) auf 215 °C Innentemperatur unter Rühren bei einer Rührgeschwindigkeit von 300 Umdrehungen/ Minute hochgeheizt, die N₂-Überleitung geschlossen und der Druck innerhalb von 2 Stunden auf 150 mbar und innerhalb von weiteren 2 Stunden auf 10 mbar gesenkt und währenddessen Glykol abdestilliert. Es wurde 2 Stunden bei 215 °C und 10 mbar nachkondensiert und anschließend auf 140 - 150 °C abgekühlt. Anschließend wurde mit N₂ belüftet und die heiße Schmelze ausgetragen. Man erhielt eine erstarrte, beige Polymerschmelze.

### Herstellung von Vergleichspolyester 1:

In einem 1-I Vierhalskolben mit KPG-Rührer, Innenthermometer, Vigreux-Kolonne, Destillationsbrücke, N₂-Überleitung (5 l/h) und Anschütz-Thiele-Vorstoß wurden folgende Edukte vorgelegt: 41,53 g (0,25 Mol) Terephthalsäuredimethylester, 27,13 g (0,437 Mol) Ethylenglykol, 362,5 g (0,29 mol) Methylpolyethylenglykol 1250, 0,5 g Natriumacetat wasserfrei (NaOAc) und 0,13 g Titantetraisopropylat (Ti(iPr)₄).

Das Gemisch wurde auf ca. 160 °C (ca. 15 - 20 min) erhitzt und das entstehende Methanol wurde destilliert. Während der Destillation wurde die Temperatur langsam innerhalb von 3 h auf 210 °C erhöht (ab einer Innentemperatur von ca. 180 °C wurde N₂ (5 l/h) übergeleitet). Es wurde solange Methanol abdestilliert bis die Kopftemperatur unterhalb von 55 °C war (mindestens 4 h/210 °C Nachrühren). Anschließend wurde auf 195 °C abgekühlt und innerhalb von einer Stunde der Druck auf 10 mbar reduziert und Glykol abdestilliert (Kopftemperatur bis ca. 150 °C). Anschließend wurde 4 h bei 10 mbar/195 °C nachkondensiert (am Ende lag die Kopftemperatur unterhalb von 75 - 80 °C). Für 5 min wurde das Vakuum auf 5 mbar reduziert, dann die Apparatur mit N₂ belüftet (Ölbad unter Kolben, Tᵢ 185 - 195 °C) und die heiße Schmelze auf ein Blech ausgetragen. Messung von Oberflächenspannungen:

**Tabelle 1: Oberflächenspannung einer unbehandelten Polyesterfaser X (die Polyesterfaser X besteht nicht aus dem Material der erfindungsgemäßen Polyester), sowie einer Polyesterfaser X, behandelt mit einer 0,04 Gew.-%igen wässrigen Dispersion des erfindungsgemäßen Polyesters 1, sowie des Vergleichspolyesters 1.**

| Polyesterfaser X | Oberflächenspannung [mN/m] |
|---|---|
| unbehandelt | 45,5 |
| Polyester 1 | 61,2 |
| Vergleichspolyester 1 | 53,3 |

| | |
|---|---|
| Gerät: | SITA Pro Line T15 Blasendrucktensiometer |
| Einstellung: | Auto Mode |
| Blasenlebensdauer: | 15 ms bis 15 s |
| Messung: | bei 15 s |
| Probelösung: | 0,04 Gew.-% Polyester 1 bzw. Vergleichspolyester 1 in destilliertem Wasser |
| Temperatur: | 20 °C |

### Messung von Ablagerungen:

**Tabelle 2: Ablagerung von Klebematerial haltigem Papierbrei auf einem Polyestersieb a) mit nicht modifizierter Oberfläche, b) modifiziert mit Polyester 1, c) modifiziert mit Vergleichspolyester 1**

| Probe | Konzentration Polyester | Polyestersieb vor Ablagerung | Polyestersieb nach 15 Minuten Kontaktzeit | Gewichtszunahme | Reduktion der Ablagerung |
|---|---|---|---|---|---|
| | [Gew.- %] | [g] | [g] | [mg] | [%] |
| a (Kontrolle) | 0 | 308,7 | 315,9 | 7,2 | 0 |
| b (Polyester 1) | 0,1 | 311,0 | 311,7 | 0,7 | 90,3 |
| C (Vergleichspolyester 1) | 0,1 | 305,6 | 310,2 | 4,6 | 36,1 |

Das verwendete Polyestersieb besteht nicht aus dem Material der erfindungsgemäßen Polyester.

Ein Klebeetikett, bestehend aus 75 g Papier und 25 g eines drucksensitiven Acrylklebers, der wiederum zu 80 Gew.-% aus 2-Polyethylhexylacrylate-Acrylat-Copolymer und 20 Gew.-% Styrolbutadien Copolymer besteht, wird auf einen 10 g schweren Zellstoffbogen aus gebleichtem Birkenholz geklebt. Dieser wird mit 750 ml Leitungswasser versetzt und bei 50 °C 2 Minuten in einem Mischer bei hoher Drehzahl zu einem homogenen Papierbrei verrührt. Die erhaltene Mischung wird mit Leitungswasser auf ein Gesamtvolumen von 1000 ml aufgefüllt und in 200 ml Proben aufgeteilt.

Es werden je 0,1 gewichtsprozentige Lösungen aus Polyester 1 und Vergleichpolyester 1 mit je 100 ml Leitungswasser hergestellt. 3 Polyestersiebe der Marke Primobond SF (Heimbach) mit den Maßen 30 x 50 mm werden auf die Kommastelle exakt gewogen. Je ein Polyestersieb wird 10 Sekunden lang bei Raumtemperatur entweder in reines Leitungswasser oder in die 0,1 gewichtsprozentige Polyester 1-Lösung oder in die 0,1 gewichtsprozentige Vergleichspolyester 1 -Lösung je 10 Sekunden lang eingetaucht und anschließend aus dem Leitungswasser oder den 0,1 gewichtsprozentigen Lösungen genommen und in ein leeres 400 ml Becherglas gegeben. Die 400 ml Bechergläser werden je mit 200 ml Papierbrei gefüllt. Je ein Polyestersieb, das entweder unbehandelt ist (Leitungswasser, Kontrolle) oder aber in der oben beschriebenen Weise (mit Polyester 1 oder Vergleichspolyester 1) behandelt ist, wird in die 200 ml Probe a), b) oder c) gegeben und diese 15 Minuten lang bei 200 Umdrehungen/ Minute gerührt. Die Polyestersiebe werden den Proben entnommen und mit kaltem Wasser abgespült, an der Luft getrocknet und gewogen.

Die Ergebnisse zeigen, dass die Verwendung von Polyester 1 dazu führt, dass eine deutlich geringere Menge an Klebemittel an dem Polyestersieb anhaftet (90,3 % Verbesserung), im Vergleich zu dem unbehandelten Polyestersieb (0 % Verbesserung) und im Vergleich zur Verwendung von Vergleichspolyester 1 (36,1 % Verbesserung).

## Patentansprüche

1. Polyester erhältlich durch Polymerisation von
a) Terephthalsäuredimethylester, und
b) Ethylenglykol, und
c) 1,2-Propylenglykol, und
d) einem oder mehreren Polyethylenglykolen mit gewichtsmittleren Molekulargewichten im Bereich von 1000 bis 2000 g/mol, und
e) einem einzigen Methylpolyethylenglykol mit einem gewichtsmittleren Molekulargewicht im Bereich von 1050 bis 1350 g/mol,
f) entweder in Gegenwart oder in Abwesenheit von einer oder mehreren vernetzend wirkenden Verbindungen mit 3 bis 6 zur Polykondensation befähigten Funktionen.

2. Polyester nach Anspruch 1, **dadurch gekennzeichnet, dass** sie durch Polymerisation unter Verwendung eines Polyethylenglykols mit einem gewichtsmittleren Molekulargewicht im Bereich von 1000 bis 2000 g/mol erhältlich sind.

3. Polyester nach Anspruch 1 oder 2, **dadurch gekennzeichnet, dass** als Komponente d) eine oder mehrere Verbindungen, ausgewählt aus Polyethylenglykolen mit gewichtsmittleren Molekulargewichten im Bereich von 1200 bis 1800 g/mol in die Polymerisation eingesetzt werden.

4. Polyester nach einem oder mehreren der Ansprüche 1 bis 3, **dadurch gekennzeichnet, dass** als Komponente d) ein Polyethylenglykol mit einem gewichtsmittleren Molekulargewicht von 1500 g/mol in die Polymerisation eingesetzt wird.

5. Polyester nach einem oder mehreren der Ansprüche 1 bis 4, **dadurch gekennzeichnet, dass** als Komponente e) ein Methylpolyethylenglykol mit einem gewichtsmittleren Molekulargewicht im Bereich von 1100 bis 1300 g/mol in die Polymerisation eingesetzt wird.

6. Polyester nach Anspruch 5, **dadurch gekennzeichnet, dass** als Komponente ein Methylpolyethylenglykol mit einem gewichtsmittleren Molekulargewicht von 1250 g/mol in die Polymerisation eingesetzt wird.

7. Polyester nach einem oder mehreren der Ansprüche 1 bis 6, **dadurch gekennzeichnet, dass** sie erhältlich sind durch Polymerisation der Komponenten a) bis e) und in Gegenwart der Komponente f).

8. Polyester nach Anspruch 7, **dadurch gekennzeichnet, dass** als Komponente f) eine oder mehrere Verbindungen ausgewählt aus der Gruppe bestehend aus Zitronensäure, Äpfelsäure, Weinsäure, Gallussäure, 2,2-Dihydroxymethylpropionsäure, Pentaerythritol, Glycerol, Sorbitol, Mannitol, 1,2,3-Hexantriol, Benzol-1,2,3-tricarbonsäure (Hemimellithsäure), Benzol-1,2,4-tricarbonsäure (Trimellithsäure) und Benzol-1,3,5-tricarbonsäure (Trimesithsäure) in die Polymerisation eingesetzt werden.

9. Polyester nach einem oder mehreren der Ansprüche 1 bis 8, **dadurch gekennzeichnet, dass** sie durch Polymerisation der Komponenten a) bis e) entweder in Gegenwart oder in Abwesenheit der Komponente f) in folgenden Molverhältnissen, jeweils bezogen auf 1 Mol der Komponente a), erhältlich sind: 0,2 bis 0,8 Mol der Komponente b), und
bis 2,0 Mol der Komponente c), und
0,05 bis 2,0 Mol der Komponente d), und
0,01 bis 1,0 Mol der Komponente e),
entweder in Gegenwart von 0,00001 bis 1,0 Mol der Komponente f) oder in Abwesenheit von Komponente f).

10. Polyester nach Anspruch 9, **dadurch gekennzeichnet, dass** sie durch Polymerisation der Komponenten a) bis e) entweder in Gegenwart oder in Abwesenheit der Komponente f) in folgenden Molverhältnissen, jeweils bezogen auf 1 Mol der Komponente a), erhältlich sind:
0,3 bis 0,7 Mol der Komponente b), und
1,1 bis 1,6 Mol der Komponente c), und
0,1 bis 1,0 Mol der Komponente d), und
0,05 bis 0,8 Mol der Komponente e),
entweder in Gegenwart von 0,00001 bis 0,5 Mol der Komponente f) oder in Abwesenheit von Komponente f).

11. Polyester nach Anspruch 10, **dadurch gekennzeichnet, dass** sie durch Polymerisation der Komponenten a) bis e) entweder in Gegenwart oder in Abwesenheit der Komponente f) in folgenden Molverhältnissen, jeweils bezogen auf 1 Mol der Komponente a), erhältlich sind:
0,4 bis 0,6 Mol der Komponente b), und
1,2 bis 1,5 Mol der Komponente c), und
0,2 bis 0,8 Mol der Komponente d), und
0,1 bis 0,5 Mol der Komponente e),
entweder in Gegenwart von 0,0001 bis 0,01 Mol der Komponente f) oder in Abwesenheit von Komponente f).

12. Polyester nach einem oder mehreren der Ansprüche 1 bis 11, **dadurch gekennzeichnet, dass** sie ein gewichtsmittleres Molekulargewicht im Bereich von 700 bis 50 000 g/mol besitzen.

13. Polyester nach Anspruch 12, **dadurch gekennzeichnet, dass** sie ein gewichtsmittleres Molekulargewicht im Bereich von 1 000 bis 15 000 g/mol besitzen.

## Claims

1. Polyesters obtainable by polymerization of
a) dimethyl terephthalate, and
b) ethylene glycol, and
c) 1,2-propylene glycol, and
d) one or more polyethylene glycols having weight-average molecular weights in the range from 1000 to 2000 g/mol, and
e) one methyl polyethylene glycol having a weight-average molecular weight in the range from 1050 to 1350 g/mol
f) in the presence or absence of one or more crosslinking compounds having 3 to 6 functions capable of poly condensation.

2. Polyesters according to Claim 1, **characterized in that** they are obtainable by polymerization using one polyethylene glycol having a weight-average molecular weight in the range from 1000 to 2000 g/mol.

3. Polyesters according to Claim 1 or 2, **characterized in that** one or more compounds selected from polyethylene glycols having weight-average molecular weights in the range from 1200 to 1800 g/mol are used in the polymerization as component d).

4. Polyesters according to one or more of Claims 1 to 3, **characterized in that** one polyethylene glycol having a weight-average molecular weight of 1500 g/mol is used in the polymerization as component d).

5. Polyesters according to one or more of Claims 1 to 4, **characterized in that** one methyl polyethylene glycol having a weight-average molecular weight in the range from 1100 to 1300 g/mol is used in the polymerization as component e).

6. Polyesters according to Claim 5, **characterized in that** one methyl polyethylene glycol having a weight-average molecular weight of 1250 g/mol is used in the polymerization as component.

7. Polyesters according to one or more of Claims 1 to 6, **characterized in that** they are obtainable by polymerization of components a) to e) in the presence of component f).

8. Polyesters according to Claim 7, **characterized in that** one or more compounds selected from the group consisting of citric acid, malic acid, tartaric acid, gallic acid, 2,2-dihydroxymethylpropionic acid, pentaerythritol, glycerol, sorbitol, mannitol, 1,2,3-hexanetriol, benzene-1,2,3-tricarboxylic acid (hemimellitic acid), benzene-1,2,4-tricarboxylic acid (trimellitic acid) and benzene-1,3,5-tricarboxylic acid (trimesic acid) are used in the polymerization as component f).

9. Polyesters according to one or more of Claims 1 to 8, **characterized in that** they are obtainable by polymerization of components a) to e) in the presence or absence of component f) in the following molar ratios, each based on 1 mol of component a):
0.2 to 0.8 mol of component b), and
up to 2.0 mol of component c), and
0.05 to 2.0 mol of component d), and
0.01 to 1.0 mol of component e),
either in the presence of 0.00001 to 1.0 mol of component f) or in the absence of component f).

10. Polyesters according to Claim 9, **characterized in that** they are obtainable by polymerization of components a) to e) in the presence or absence of component f) in the following molar ratios, each based on 1 mol of component a):
0.3 to 0.7 mol of component b), and
1.1 to 1.6 mol of component c), and
0.1 to 1.0 mol of component d), and
0.05 to 0.8 mol of component e),
either in the presence of 0.00001 to 0.5 mol of component f) or in the absence of component f).

11. Polyesters according to Claim 10, **characterized in that** they are obtainable by polymerization of components a) to e) in the presence or absence of component f) in the following molar ratios, each based on 1 mol of component a):
0.4 to 0.6 mol of component b), and
1.2 to 1.5 mol of component c), and
0.2 to 0.8 mol of component d), and
0.1 to 0.5 mol of component e),
either in the presence of 0.0001 to 0.01 mol of component f) or in the absence of component f).

12. Polyesters according to one or more of Claims 1 to 11, **characterized in that** they have a weight-average molecular weight in the range from 700 to 50 000 g/mol.

13. Polyesters according to Claim 12, **characterized in that** they have a weight-average molecular weight in the range from 1000 to 15 000 g/mol.

## Revendications

1. Polyesters pouvant être obtenus par polymérisation de :
a) de l'ester diméthylique de l'acide téréphtalique, et
b) de l'éthylène glycol, et
c) du 1,2-propylène-glycol, et
d) un ou plusieurs polyéthylène glycols ayant des poids moléculaires moyens en poids dans la plage allant de 1 000 à 2 000 g/mol, et
e) un méthylpolyéthylène glycol unique ayant un poids moléculaire moyen en poids dans la plage allant de 1 050 à 1 350 g/mol,
f) en la présence ou en l'absence d'un ou de plusieurs composés à activité réticulante contenant 3 à 6 fonctions aptes à la polycondensation.

2. Polyesters selon la revendication 1, **caractérisés en ce qu'**ils peuvent être obtenus par polymérisation en utilisant un polyéthylène glycol ayant un poids moléculaire moyen en poids dans la plage allant de 1 000 à 2 000 g/mol.

3. Polyesters selon la revendication 1 ou 2, **caractérisés en ce qu'**un ou plusieurs composés choisis parmi les polyéthylène glycols ayant des poids moléculaires moyens en poids dans la plage allant de 1 200 à 1 800 g/mol sont utilisés dans la polymérisation en tant que composant d).

4. Polyesters selon une ou plusieurs des revendications 1 à 3, **caractérisés en ce qu'**un polyéthylène glycol ayant un poids moléculaire moyen en poids de 1 500 g/mol est utilisé dans la polymérisation en tant que composant d).

5. Polyesters selon une ou plusieurs des revendications 1 à 4, **caractérisés en ce qu'**un méthylpolyéthylène glycol ayant un poids moléculaire moyen en poids dans la plage allant de 1 100 à 1 300 g/mol est utilisé dans la polymérisation en tant que composant e).

6. Polyesters selon la revendication 5, **caractérisés en ce qu'**un méthylpolyéthylène glycol ayant un poids moléculaire moyen en poids de 1 250 g/mol est utilisé dans la polymérisation en tant que composant e).

7. Polyesters selon une ou plusieurs des revendications 1 à 6, **caractérisés en ce qu'**ils peuvent être obtenus par polymérisation des composants a) à e) en présence du composant f).

8. Polyesters selon la revendication 7, **caractérisés en ce qu'**un ou plusieurs composés choisis dans le groupe constitué par l'acide citrique, l'acide malique, l'acide tartrique, l'acide gallique, l'acide 2,2-dihydroxyméthylpropionique, le pentaérythritol, le glycérol, le sorbitol, le mannitol, le 1,2,3-hexanetriol, l'acide benzène-1,2,3-tricarboxylique (acide hémimellitique), l'acide benzène-1,2,4-tricarboxylique (acide trimellitique) et l'acide benzène-1,3,5-tricarboxylique (acide trimésitique) sont utilisés dans la polymérisation en tant que composant f).

9. Polyesters selon une ou plusieurs des revendications 1 à 8, **caractérisés en ce qu'**il peuvent être obtenus par polymérisation des composants a) à e), en la présence ou en l'absence du composant f), en les rapports molaires suivants, à chaque fois par rapport à 1 mole du composant a) :
0,2 à 0,8 mole du composant b), et
jusqu'à 2,0 moles du composant c), et
0,05 à 2,0 moles du composant d), et
0,01 à 1,0 mole du composant e),
en la présence de 0,00001 à 1,0 mole du composant f), ou en l'absence du composant f).

10. Polyesters selon la revendication 9, **caractérisés en ce qu'**ils peuvent être obtenus par polymérisation des composants a) à e), en la présence ou en l'absence du composant f), en les rapports molaires suivants, à chaque fois par rapport à 1 mole du composant a) :
0,3 à 0,7 mole du composant b), et
1,1 à 1,6 mole du composant c), et
0,1 à 1,0 mole du composant d), et
0,05 à 0,8 mole du composant e),
en la présence de 0,00001 à 0,5 mole du composant f), ou en l'absence du composant f).

11. Polyesters selon la revendication 10, **caractérisés en ce qu'**ils peuvent être obtenus par polymérisation des composants a) à e), en la présence ou en l'absence du composant f), en les rapports molaires suivants, à chaque fois par rapport à 1 mole du composant a) :
0,4 à 0,6 mole du composant b), et
1,2 à 1,5 mole du composant c), et
0,2 à 0,8 mole du composant d), et
0,1 à 0,5 mole du composant e),
en la présence de 0,0001 à 0,01 mole du composant f), ou en l'absence du composant f).

12. Polyesters selon une ou plusieurs des revendications 1 à 11, **caractérisés en ce qu'**ils présentent un poids moléculaire moyen en poids dans la plage allant de 700 à 50 000 g/mol.

13. Polyesters selon la revendication 12, **caractérisés en ce qu'**ils présentent un poids moléculaire moyen en poids dans la plage allant de 1 000 à 15 000 g/mol.
